# EUROPÄISCHE PATENTSCHRIFT

(11) **EP 1 716 647 B1**
(45) Veröffentlichungstag und Bekanntmachung des Hinweises auf die Patenterteilung: **05.03.2008**
(21) Anmeldenummer: 04804627.0
(22) Anmeldetag: 01.12.2004
(51) Int. Cl.: H04B 7/08

(54) **FUNKEMPFANGSSYSTEM MIT ZWEI EMPFANGSANTENNEN UND ZWEI DARAN ANGESCHLOSSENEN EMPFÄNGERN**
RADIO RECEPTION SYSTEM COMPRISING TWO RECEIVE ANTENNAS AND TWO RECEIVERS THAT ARE CONNECTED THERETO
SYSTEME RECEPTEUR RADIO A DEUX ANTENNES RECEPTRICES ET DEUX RECEPTEURS ASSOCIES A CELLES-CI

(30) Priorität: 17.01.2004 DE 102004002481
(43) Veröffentlichungstag der Anmeldung: 02.11.2006
(73) Patentinhaber: ROBERT BOSCH GMBH, 70442 Stuttgart (DE)
(72) Erfinder: KOTTSCHLAG, Gerhard, 31139 Hildesheim (DE); PITZ, Gerhard, 31139 Hildesheim (DE)
(86) Internationale Anmeldenummer: PCT/EP2004/053195
(87) Internationale Veröffentlichungsnummer: WO 2005/069507

(56) Entgegenhaltungen:
- DE-A1- 2 918 269
- DE-A1- 10 130 234

## Beschreibung

### Stand der Technik

Die Erfindung geht von einem Funkempfangssystem mit zwei an zwei Empfangsantennen angeschlossenen Empfängern nach der Gattung des unabhängigen Patentanspruchs aus.

Ein gattungsgemäßes Funkempfangssystem ist beispielsweise aus DE 101 30 234 A1 bekannt. DE 101 30 234 A1 offenbart ein Funkempfangssystem mit zwei Empfangsantennen, mit zwei Empfängern sowie mit einem transformatorischen Übertrager mit zwei Wicklungen, bei dem eine erste der zwei Empfangsantennen an einen Mittelanzapf der ersten Wicklung des Übertragers angeschlossen ist, bei dem die Endanschlüsse der ersten Wicklung mit den beiden Empfängern verbunden sind und bei dem die zweite der zwei Empfangsantennen mit einem Endanschluss der zweiten Wicklung des Übertragers verbunden ist.

### Vorteile der Erfindung

Ein Funkempfangssystem mit den Merkmalen des unabhängigen Patentanspruchs stellt eine vorteilhafte Alternativlösung zu dem aus DE 101 30 234 A1 bekannten Funkempfangssystem dar. Aufgrund der Tatsache, dass bei der beanspruchten Beschaltung des transformatorischen Übertragers eine Abwärtstransformation der Antennenimpedanz erfolgt, eignet sich das erfindungsgemäße Funkempfangssystem in besonderer Weise für Empfänger, die im Vergleich zur Antennenimpedanz eine niedrige Eingangsimpedanz aufweisen. Eine niedrige Eingangsimpedanz ermöglicht in vorteilhafter Weise die Verwendung von beispielsweise SiGe-Bipolar-Transistoren als Empfängereingangsstufen. Eine niedrige Eingangsimpedanz der angeschlossenen Empfänger bewirkt zugleich erhöhte Eingangsströme, die eine erhöhte Störunanfälligkeit gegenüber insbesondere elektromagnetischen Einstreuungen bewirken und trägt somit zu einer Erhöhung der Störfestigkeit der Empfänger und damit zu einem verbesserten Empfangsverhalten bei. Dies ist insbesondere bei Betrieb der Empfängeranordnung unter wechselnden Empfangsbedingungen, beispielsweise bei Betrieb in einem Kraftfahrzeug von Bedeutung.

### Zeichnung

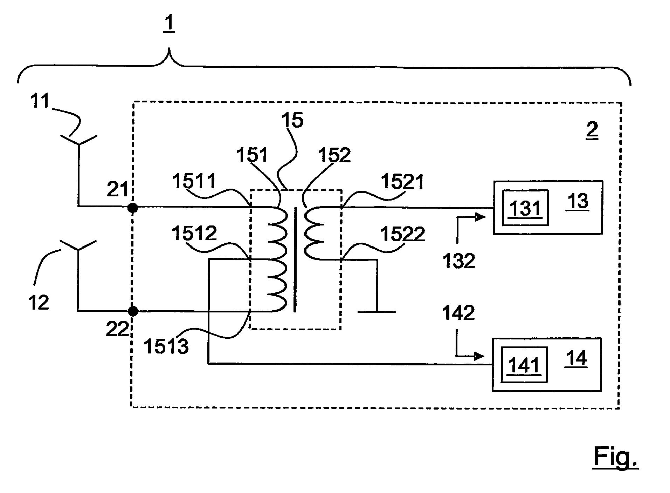

Ein vorteilhaftes Ausführungsbeispiel ist in der Figur dargestellt und wird nachfolgen näher erläutert.

Die Figur zeigt ein Blockschaltbild des erfindungswesentlichen Teils eines erfindungsgemäßen Funkempfangssystems mit zwei Empfängern, die über einen transformatorischen Übertrager mit zwei Empfangsantennen verbunden sind, so dass beiden Empfängern jeweils die Empfangssignale beider Empfangsantennen zur Verfügung stehen.

### Beschreibung der Ansführungsbeispiele

Ein erfindungsgemäßes Funkempfangssystem wird nachfolgend am Beispiel eines für einen Einsatz in einem Kraftfahrzeug bestimmten Rundfunkempfängers, nachfolgend kurz Autoradio, beschrieben. Dies bedeutet jedoch keine Einschränkung der Erfindung auf Autoradiogeräte, vielmehr ist die Erfindung grundsätzlich auf jedwede Form von Funkempfängern abwendbar.

Das erfindungsgemäße Funkempfangssystem 1 weist eine erste Empfangsantenne 11 und eine zweite Empfangsantenne 12 auf. Die Empfangssignale der beiden Empfangsantennen werden mittels einer Zuordnungsschaltung 15 sowohl einem ersten Empfänger 13 als auch einem zweiten Empfänger 14 zugeführt.

Die Zuordnungsschaltung 15 ist dazu als transformatorischer Übertrager ausgebildet, der eine erste Wicklung 151 und eine zweite Wicklung 152 aufweist. Die erste Wicklung 151 weist drei Anschlüsse auf, wobei ein erster Anschluss 1511 einem ersten Endanschluss der ersten Wicklung 151, ein zweiter Anschluss 1512 einem Mittelabgriff der ersten Wicklung 151 und ein dritter Anschluss einem zweiten Endanschluss der ersten Wicklung 151 entspricht Die zweite Wicklung 152 weist zwei Endanschlüsse 1521 und 1522 auf. Die Windungszahl der zweiten Wicklung 152 beträgt zumindest annähernd die Hälfte der Wicklungszahl der ersten Wicklung 151.

Die beiden Empfangsantennen 11 und 12 sind mit den beiden Endanschlüssen 1511 und 1513 der ersten Wicklung 151 des transformatorischen Übertragers 15 verbunden. Einer der beiden Endanschlüsse 1521, 1522, im vorliegenden Fall der erste Endanschluss 1521 der zweiten Wicklung 152 ist mit dem Eingang eines der beiden Empfänger 13, 14, hier des ersten Empfängers 13 verbunden. Der andere der beiden Endanschlüsse der zweiten Wicklung 152, hier der zweite Endanschluss 1522 ist mit einem Bezugspotential, hier Schaltungsmasse verbunden. Der Mittelanzapf 1512 der ersten Wicklung 151 ist dem Eingang des jeweils anderen der beiden Empfänger 13, 14, hier also dem zweiten Empfänger 14, verbunden.

Die beiden Empfänger 13 und 14 sowie die Zuordnungsschaltung 15 sind typischerweise Bestandteil eines Autoradiogeräts 2, dessen Antenneneingänge 21 und 22 mit den Endanschlüssen 1511 und 1513 der ersten Wicklung 151 des Transformators 15 verbunden sind.

Die beschriebene Schaltungsanordnung bewirkt, dass sowohl dem ersten Empfänger 13, als auch dem zweiten Empfänger 14 jeweils die Empfangssignale sowohl der ersten Antenne 11, als auch der zweiten Antenne 12 zugeführt werden. Durch den räumlichen Abstand der beiden Antennen voneinander werden Funksignale phasenversetzt von den beiden Antennen empfangen. Da dem einen Empfänger 14 das Summensignal aus den beiden Signalen der Antennen 11, 12, aber dem anderen Empfänger 13 hingegen das Differenzsignal zugeführt wird, sind die beiden Empfängereingangssignale unkorrelliert, d.h. die Zusammenführung mit unterschiedlicher Phasenlage führt dazu, dass die beiden Empfänger unterschiedliche Eingangssignale enthalten, die von Signalauslöschungen und/oder andere Störungen unterschiedlich stark beeinträchtigt sind. Damit kann beispielsweise mit den beiden Empfängern ein sogenannter an sich bekannter Diversity-Empfangsbetrieb realisiert werden, bei dem aus den beiden Empfangssignalen das eine bessere Empfangsqualität aufweisende Signal ausgewählt oder alternativ durch geeignete Gewichtung der Einzelsignale ein optimiertes Summensignal gebildet wird. Solche Diversity-Empfangsstrategien sind beispielsweise aus DE 25 14 181 A1- dort Umschaltung zwischen den Antennen oder DE 35 10 580 A1 DE 37 41 698 C2 - dort Addition geeignet bewerteter Antennensignale zu einem optimierten Summensignal bekannt, so dass diesbezüglich auf die erwähnten Dokumente verwiesen wird.

Die beschriebene Schaltungsanordnung bewirkt ferner eine Abwärtstransformation der Impedanzen der Empfangsantennen 11 und 12, im Falle des beim vorliegenden Ausführungsbeispiel gewählten Wicklungszahlenverhältnisses der ersten Wicklung 151 zur zweiten Wicklung 152 von näherungsweise 2 : 1 wird die Impedanz näherungsweise halbiert. Um eine optimale Verwertung der Antennensignalleistung zu gewährleisten, ist eine Impedanzanpassung der Eingangsstufen 131 und 141 der an die Antennen 11 und 12 angeschlossenen Empfänger 13 und 14 von Vorteil. Im Falle der vorliegenden Abwärtstransformation der Antennenimpedanzen bedeutet dies, dass die Eingangsimpedanzen 132 und 142 der Eingangsstufen 131 und 141 der beiden Empfänger 13 und 14 näherungsweise die Hälfte der Antennenimpedanzen 11 und 12 aufweisen sollten. Statt einer Leistungsanpassung kann auch eine Rauschanpassung vorgesehen sein.

Die Eingangsstufen der heute üblichen Fahrzeugempfänger weisen hohe Impedanzen auf, die sich aus schmalbandigen hochohmigen Vorfiltern zur Antennensignalselektion und ferner typischerweise eingangsseitig vorgesehenen Feldeffekttransistoren zur Entkopplung der Filter und Signalverstärkung ergeben. Eine erheblich reduzierte Eingangsimpedanz ist bei diesem Konzept mit geringem Aufwand kaum realisierbar.

Hier bietet sich die Verwendung von Bipolar-Transistoren, beispielsweise SiGe-Transistoren, an. Bipolar-Transistoren weisen per se bereits eine geringere Eingangsimpedanz als Feldeffekt-Transistoren auf. Allerdings ist dabei zu berücksichtigen, dass Bipolar-Transistoren mit hochohmigen Vorfiltern nicht harmonieren und deren Filterfunktion erheblich verzerren würden.

Umgekehrt ist es aber zur Realisierung einer Leistungsanpassung oder Rauschanpassung auch möglich, die Impedanzen der Empfangsantennen 11 und 12 entsprechend an die Eingangsimpedanzen 132 und 142 bestehender Empfänger 13 und 14 anzupassen. Dies ermöglicht die Entwicklung und den Einsatz neuer, insbesondere auch hochohigerer Antennenstrukturen, die in Fahrzeugen bislang üblicherweise nicht eingesetzt wurden.

Vorteilhaft lassen sich auch beide Vorgehensweisen miteinander kombinieren, nämlich zum einen die Wahl gegenüber aktuell verwendeten Antennen etwas höherohmiger Antennen und zugleich den Anschluss von Empfängern, die gegenüber aktuell verwendeten Empfängern eine leicht verringerte Eingangsimpedanz aufweisen, so dass eine radikale Abkehr von bisherigen Antennen- und Empfängerkonzepten nicht notwendig wird.

## Patentansprüche

1. Funkempfangssystem (1) mit zwei Empfangsantennen (11, 12), mit zwei Empfängern (13, 14) sowie mit einem transformatorischen Übertrager (15), der dazu vorgesehen ist, jedem der Empfänger (13, 14) Funksignale beider Antennen (11, 12) zuzuführen, wobei der transformatorische Übertrager eine erste (151) und eine zweite Wicklung (152) aufweist
**dadurch gekennzeichnet,**
**dass** die beiden Empfangsantennen (11, 12) mit den Endanschlüssen (1511, 1513) der ersten Wicklung (151) verbunden sind,
und **dass** ein erster (13) der zwei Empfänger (13, 14) mit einem Mittelanzapf (1512) der ersten Wicklung (151) und ein zweiter (14) der zwei Empfänger (13, 14) mit einem Endanschluss (1521) der zweiten Wicklung (152) verbunden ist.

2. Funkempfangssystem nach Anspruch 1, **dadurch gekennzeichnet, dass** die beiden Empfangsteile (13, 14) Eingangsimpedanzen (132, 142) aufweisen, die annähernd halb so groß wie die Impedanzen der Antennen (11, 12) sind.

3. Funkempfangssystem nach Anspruch 1 oder 2, **dadurch gekennzeichnet, dass** die beiden Empfangsteile (13, 14) Bipolar-Transistoren, insbesondere SiGe-Bipolar-Transistoren, oder Bauteile mit vergleichbar geringen Eingangsimpedanzen als Eingangsstufen (131, 141) aufweisen.

## Claims

1. Radio receiving system (1) having two receiving antennas (11, 12), having two receivers (13, 14) and having a transformer (15) which is intended to supply each of the receivers (13, 14) with radio signals from both antennas (11, 12), with the transformer having a first winding (151) and a second winding (152),
**characterized**
**in that** the two receiving antennas (11, 12) are connected to the end connections (1511, 1513) of the first winding (151),
and **in that** a first (13) of the two receivers (13, 14) is connected to a centre tap (1512) of the first winding (151) and a second (14) of the two receivers (13, 14) is connected to an end connection (1521) of the second winding (152).

2. Radio receiving system according to Claim 1, **characterized in that** the two receiving parts (13, 14) have input impedances (132, 142) which are approximately half the magnitude of the impedances of the antennas (11, 12).

3. Radio receiving system according to Claim 1 or 2, **characterized in that** the two receiving parts (13, 14) have bipolar transistors, in particular SiGe bipolar transistors, or components with comparably low input impedances as input stages (131, 141).

## Revendications

1. Système de réception radio (1) comportant deux antennes de réception (11, 12), deux récepteurs (13, 14) ainsi qu'un transmetteur à transformateur (15) pour fournir à chaque récepteur (13, 14) les signaux radio des deux antennes (11, 12), le transmetteur à transformateur ayant un premier enroulement (151) et un second enroulement (152),
**caractérisé en ce que**
les deux antennes de réception (11, 12) sont reliées par leur branchement d'extrémité (1511, 1513) au premier enroulement (151), et
un premier (13) des deux récepteurs (13, 14) est relié à la prise centrale (1512) du premier enroulement (151) et le second (14) des deux récepteurs (13, 14) est relié au branchement d'extrémité (15, 21) du second enroulement (152).

2. Système de réception radio selon la revendication 1,
**caractérisé en ce que**
les deux parties de réception (13, 14) ont des impédances d'entrée (132, 142) sensiblement moitiés de l'impédance des antennes (11, 12).

3. Système de réception radio selon la revendication 1 ou 2,
**caractérisé en ce que**
les deux parties de réception (13, 14) sont des transistors bipolaires, notamment des transistors bipolaires (SiGe) ou des composants ayant des impédances d'entrée faibles, comparables, constituant les étages d'entrée (131, 141).
